# EUROPÄISCHE PATENTSCHRIFT

(11) **EP 3 008 994 B1**
(45) Veröffentlichungstag und Bekanntmachung des Hinweises auf die Patenterteilung: **16.09.2020**
(21) Anmeldenummer: 15187554.9
(22) Anmeldetag: 30.09.2015
(51) Int. Cl.: A01K 61/54, A01K 61/60

(54) **SCHUTZEINRICHTUNG FÜR DIE TIERZUCHT, WIE FISCH-, MUSCHEL- ODER WEICHTIERZUCHT**
PROTECTIVE DEVICE FOR ANIMAL HUSBANDRY, SUCH AS THE REARING OF FISH, MUSSELS OR MOLLUSCS
DISPOSITIF DE PROTECTION POUR L'ELEVAGE D'ANIMAUX TEL QUE LA PISCICULTURE, LA MYTILICULTURE OU LA CONCHYLICULTURE

(30) Priorität: 14.10.2014 CH 15902014
(43) Veröffentlichungstag der Anmeldung: 20.04.2016
(73) Patentinhaber: Geobrugg AG, 8590 Romanshorn (CH)
(72) Erfinder: DORNBIERER, Urs, 9404 Rorschacherberg (CH)
(74) Vertreter: Daub, Thomas

(56) Entgegenhaltungen:
- EP-A1- 2 580 958
- WO-A1-2010/049089
- WO-A1-2013/124070
- FR-A1- 2 945 410
- US-A- 5 193 481
- US-A1- 2011 114 028
- US-B1- 6 216 635

## Beschreibung

Die Erfindung betrifft eine Schutzeinrichtung für die Tierzucht, wie Fisch-, Muschel- oder Weichtierzucht, mit wenigstens einem in einem Gewässer stationierbaren Käfig, welcher aus einem Netz gebildet und dabei mit einer solchen Maschenweite dimensioniert ist, dass in diesem die zu züchtenden Tiere zurückgehalten werden.

Für die Fischzucht werden Käfige aus Plastikseilen hergestellten Netzen verwendet, wie dies gemäss der Druckschrift WO-A-96/13973 bekannt ist. Die aus Kunststoff bestehenden Plastiknetze sind üblicherweise mit einem Seildurchmesser von beispielsweise zwischen annähernd 4 bis 6 mm und relativ kleinen Maschenöffnungen von 10 bis 30 mm dimensioniert, damit auch junge bzw. kleine Fische nicht entweichen können. Bei solchen Käfigen aus Kunststoffnetzen besteht die Gefahr, dass wenn diese in offenen Meeren montiert sind, dass Raubtiere, wie Haifische, Seehunde oder Seelöwen, von aussen die Käfige gegebenenfalls mit dem Maul aufreissen oder mit relativ hoher Schwimmgeschwindigkeit gegen diese stossen und diese beschädigen können, so dass die zu züchtenden Tiere bei diesen beschädigten Stellen ungewollt herausschwimmen können.

Die Druckschrift FR-2 945 410 beschreibt ein Dispositiv zum Schutz von Muscheln mit einem Muschelzaun, bei dem ein Träger in der Form eines Pfahls auf den Meeresboden gestellt ist, welcher in den Meeresboden eingeschlagen ist. Es ist ein rohrförmiger Käfig mit einem Mantel vorgesehen, welcher mit einer verformbaren Dehnstruktur verbunden ist. Damit ist aber nicht ein innerer und äusserer Käfig jeweils aus einem Netz mit einer bestimmten Maschenweite offenbart, sondern bloss ein solcher Pfahl als Träger, um den herum dann dieser aus einem Netz bestehender Mantel beabstandet angeordnet ist.

Bei dem Käfig nach der Druckschrift US-6,216,635 ist ein Netz mit einer zylindrischen Form mit einem Boden und ein dieses umgebendes Raubtiernetz offenbart, welches das innere Netz und die Fische darin schützen soll. Ein rahmenförmiges Hebesystem halten die Netze am oberen Ende. Dieses äussere Netz ist wie das innere korbförmig ausgebildet und hat dabei zylinderförmige Seitenwände und diesen unteren Boden.

Davon ausgehend wurde der vorliegenden Erfindung die Aufgabe zugrundegelegt, eine Schutzeinrichtung nach der eingangs erwähnten Gattung zu schaffen, mittels der bei einfacher Montage und verbesserter Sicherung der zu züchtenden Tiere gegen Raubtiere eine hohe Lebensdauer erzielt wird. Ferner soll bei dieser Schutzeinrichtung eine einfache Reinigung ermöglicht werden.

Erfindungsgemäss ist diese Aufgabe nach den Merkmalen des Anspruchs 1 gelöst.

Dabei werden die im Gewässer stationierten Käfige vorzugsweise rundherum von zumindest einem zu diesem beabstandeten äusseren Käfig umschlossen, welcher aus einem Netz aus dünnen Drähten hergestellt ist, wobei seine Maschenweite grösser als diejenige der inneren Käfige ist. Mit diesem äusseren Käfig ist gewährleistet, dass Raubtiere das Netz von aussen nicht beschädigen können und damit kein Zugang zu den inneren Käfigen ermöglicht ist bzw. die zu züchtenden Fische aus dem Käfig entweichen können.

Sehr vorteilhaft ist der äussere Käfig durch zum Gewässergrund geführten Längselemente gespannt, damit der Käfig auch bei starken Strömungen im Gewässer seine stabile Form und damit auch rundherum den erforderlichen Abstand zum inneren Käfig annähernd beibehält.

Weitere Einzelheiten der Schutzeinrichtung im Rahmen der Erfindung sind in den abhängigen Ansprüchen definiert.

Ausführungsbeispiele sowie weitere Vorteile der Erfindung sind nachfolgend anhand einer Zeichnung näher erläutert. Es zeigt:
- Fig. 1: eine schematische perspektivische Ansicht der erfindungsgemässen Schutzeinrichtung;
- Fig. 2: einen schematischen Teilschnitt der Schutzeinrichtung nach Fig.1; und
- Fig. 3: eine schematische Aussenansicht der Schutzeinrichtung nach Fig.2.

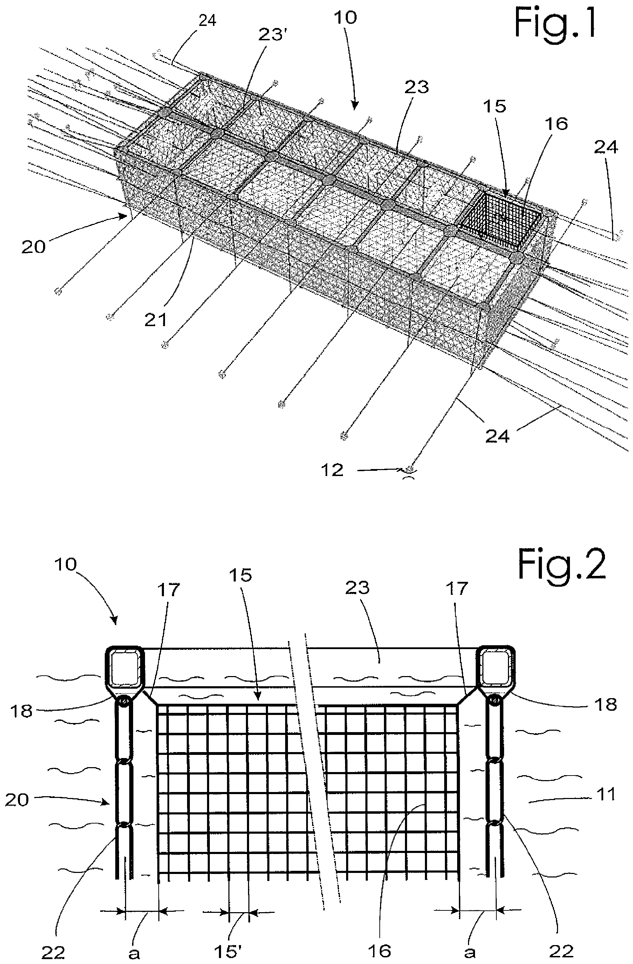

Fig. 1 bis Fig. 3 zeigen eine Schutzeinrichtung 10 für die Tierzucht in einem Gewässer 11. Sie eignet sich vorzugsweise für die Fischzucht im offenen Meer und sie kann mit einer Länge von über 120 m bemessen sein. Sie könnte aber auch für andere züchtbare Tiere, wie Muscheln und/oder andere Weichtiere verwendet werden und dabei auch eine runde zylindrische oder ähnliche Form aufweisen.

Im vorliegenden Ausführungsbeispiel sind erfindungsgemäss mehrere in dem Gewässer 11 stationierbare Käfige 15 vorgesehen, die als Module ausgebildet sind und von denen nur eines veranschaulicht ist. Diese Käfige 15 sind aus einem Netz 16 hergestellt und dabei mit einer solchen Maschenweite 15' dimensioniert, dass die in diesem zu züchtenden Tiere nicht hindurchschwimmen können.

Erfindungsgemäss sind diese Käfige 15 vorzugsweise rundherum von zumindest einem beabstandeten äusseren Käfig 20 umschlossen, welcher aus einem Netz 21 aus dünnen Drähten 22 hergestellt ist, wobei die Maschenweite des Netzes 21 grösser als diejenige der inneren Käfige 15 ist und mit diesem äusseren Käfig 20 gewährleistet ist, dass Raubtiere dieses von aussen nicht beschädigen können.

Der äussere Käfig 20 ist oben von einem schwimmenden Rahmen 23 erfindungsgemäss gehalten, dazu entsprechende Befestigungsmittel 18 vorgesehen sind. Dieser Rahmen 23 ist in zwölf Abschnitte 23' unterteilt, in welche jeweils ein innerer Käfig 15 als Modul einsetzbar ist. Selbstverständlich könnte auch eine andere Anzahl von solchen Abschnitten oder auch keiner vorgesehen sein.

Der äussere Käfig 20 ist durch zum Gewässergrund 12 geführten Längselemente 24 gespannt, damit der Käfig auch bei starken Strömungen im Gewässer 11 seine stabile Form und damit auch rundherum den bestimmten Abstand a zum inneren Käfig 15 annähernd beibehält.

Der innere Käfig 15 ist durch andeutungsweise gezeigte Verbindungselemente 17 am Rahmen 23 und/oder am Käfig 20 beabstandet zu diesem gehalten. Sie können aber leicht aus dem äusseren Käfig 20 herausgenommen und gereinigt oder durch neue ersetzt werden.

Erfindungsgemäss ist das Netz 21 des äusseren Käfigs 20 aus einem Drahtgeflecht aus einzelnen wendelförmig gebogen Drähten 22 hergestellt. Das Drahtgeflecht ist als ein viereckiges Diagonalgeflecht mit rhomboidförmigen Maschen 26 und einer dreidimensionalen matratzenartigen Struktur gebildet, wobei die Maschenweiten 26' zweckmässigerweise zwischen 70 bis 90 mm bemessen sind, währenddem die Maschenweiten 15' des Netzes 16 des inneren Käfigs annähernd 10 bis 30 mm betragen, wobei dieses Netz 16 vorzugsweise aus Plastikseilen hergestellt ist.

Die Drähte 22 sind vorzugsweise mit einem Durchmesser zwischen 1 und 3 mm versehen, so dass sich an diesen mit kleinen Oberflächen weniger Algen- und Schlammablagerungen bilden und darüberhinaus einfach gereinigt werden können.

Zur Erzielung einer ausreichenden Festigkeit sind diese dünnen Drähte 22 des äusseren Käfigs 20 aus hochfestem Stahl mit einer Nennfestigkeit von annähernd 1'000 N/mm² oder mehr hergestellt. Dies kann je nach Gegebenheiten auch variiert werden. Zudem bestehen die Drähte 22 aus einem nichtrostenden Salzwasser beständigen Material. Damit hat sich in überraschender Weise gezeigt, dass sich mit dieser Schutzeinrichtung 10 nach der Erfindung insgesamt eine hohe Lebensdauer ergibt.

Die einzelnen wendelförmig gebogen Drähte 22 des Drahtgeflechts sind an ihren Enden paarweise durch Schlaufen 22' derart gelenkig miteinander verbunden, dass sie keine die Tiere verletzende Schneidkanten bilden. Zu diesem Zwecke sind die Drähte 22 nach dem Umbiegen zu Schlaufen 22' zusätzlich mit vorzugsweise mehreren um ihren eigenen Umfang gewundenen Schlingen 27 versehen. Mit diesen gelenkig verbundenen Schlaufen 22' ist gewährleistet, dass sich dieses Netz 21 für den Transport zusammenrollen lässt.

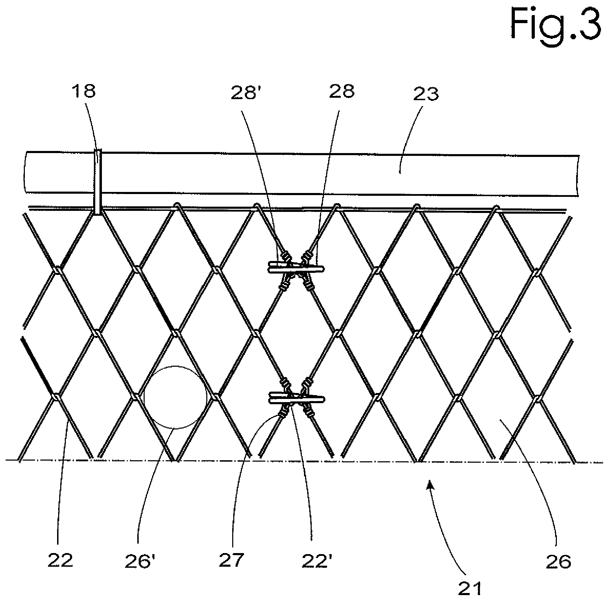

Gemäss Fig. 3 ist das Netz 21 vorzugsweise aus mehreren Bahnen zusammengesetzt, wobei diese durch Verbindungsmittel aneinander gehalten sind. Als Verbindungsmittel eignen sich korrosionsbeständige Seile, Pressklauen oder ähnliches. Es ist eine solche an sich bekannte Pressklaue 28 aus einem korrosionsgeschützten Draht veranschaulicht, welche aus zwei von einer gerundeten Basis wegragende Schenkel 28' aufweist, die an ihrem freien Ende mit je einem Haken versehen sind, wobei die beiden Haken gegeneinander gerichtet sind.

Die Erfindung ist mit den oben erläuterten Ausführungsbeispielen ausreichend dargetan. Sie könnte aber noch durch weitere Varianten erläutert sein.

Nicht erfindungsgemäss könnten die Käfige der Schutzeinrichtung nur aus Hüllen bestehen, bei welchen die Netzwände bis zum Boden ragen und auf der Unterseite desselben kein oder nur teilweise ein Netz vorgesehen ist.

Je nach den Gegebenheiten in einem Gewässer könnte die äussere Hülle nur durch eine Wandung gebildet sein, wenn beispielsweise der innere Käfig in einer hafenähnlichen Umgebung stationiert wäre.

Auch nicht erfindungsgemäss könnte anstelle des oberen schwimmenden Rahmens 23 insbesondere bei kleineren Käfigen nur ein den Käfig umfassendes Seil oder dergleichen vorgesehen sein.

## Patentansprüche

1. Schutzeinrichtung für die Tierzucht, wie Fisch-, Muschel- oder Weichtierzucht, mit mehreren in einem Gewässer (11) stationierbaren inneren Käfigen (15), welche aus einem Netz (16) gebildet und dabei mit einer solchen Maschenweite (16') dimensioniert sind, dass in diesen die zu züchtenden Tiere zurückgehalten werden, wobei diese inneren Käfige (15) von zumindest einem beabstandeten äusseren Käfig (20) umschlossen sind, welcher aus einem Netz (21) aus dünnen Drähten (22) hergestellt ist, wobei seine Maschenweite (26') grösser als diejenige der inneren Käfige (15) ist, und wobei mit diesem äusseren Käfig (20) gewährleistet ist, dass Raubtiere das Netz (16) der inneren Käfige (15) von aussen nicht beschädigen können, **dadurch gekennzeichnet, dass** das Netz (21) des äusseren Käfigs (20) aus einem Drahtgeflecht aus einzelnen wendelförmig gebogen Drähten (22) gebildet ist und das Drahtgeflecht ein viereckiges Diagonalgeflecht mit rhomboidförmigen Maschen (26) und mit einer dreidimensionalen matratzenartigen Struktur ausbildet, wobei der äussere Käfig (20) von einem oberen schwimmenden Rahmen (24) umfassend gehalten ist, und wobei die inneren Käfige (15) als Module ausgebildet sind und der Rahmen (23) in mehrere Abschnitte (23') unterteilt ist, in welche jeweils ein innerer Käfig (15) als Modul einsetzbar ist.

2. Schutzeinrichtung nach Anspruch 1, **dadurch gekennzeichnet, dass** der äussere Käfig (20) durch zum Gewässergrund (12) geführten Längselemente (24) gespannt ist, damit der Käfig (20) auch bei starken Strömungen im Gewässer seine stabile Form und damit auch rundherum den bestimmten Abstand (a) zu den inneren Käfigen (15) annähernd beibehält.

3. Schutzeinrichtung nach Anspruch 1 oder 2, **dadurch gekennzeichnet, dass** die aus einem Kunststoffmaterial bestehenden inneren Käfige (15) durch Verbindungselemente (17) rundherum beabstandet zum äusseren Käfig (20) gehalten ist.

4. Schutzeinrichtung nach einem der vorhergehenden Ansprüche 1 bis 3, **dadurch gekennzeichnet, dass** die dünnen Drähte (22) des äusseren Käfigs (20) einen Durchmesser zwischen 1 und 3 mm aufweisen.

5. Schutzeinrichtung nach einem der vorhergehenden Ansprüche 1 bis 4, **dadurch gekennzeichnet, dass** das Netz (21) des äusseren Käfigs (22) mit Maschenweiten von zwischen 70 bis 90 mm ausgebildet ist, währenddem die Maschenweiten (15') der inneren Käfige (15) 10 mm bis 30 mm betragen.

6. Schutzeinrichtung nach einem der vorhergehenden Ansprüche 1 bis 4, **dadurch gekennzeichnet, dass** die dünnen Drähte (22) des äusseren Käfigs aus hochfestem Stahl mit einer Nennfestigkeit von mindestens 1'000 N/mm² hergestellt sind.

7. Schutzeinrichtung nach einem der vorhergehenden Ansprüche 1 bis 6, **dadurch gekennzeichnet, dass** die dünnen Drähte (22) des äusseren Käfigs aus einem nichtrostenden Salzwasser beständigen Material bestehen.

8. Schutzeinrichtung nach einem der vorhergehenden Ansprüche 1 bis 7, **dadurch gekennzeichnet, dass** die einzelnen wendelförmig gebogen Drähte (22) des Drahtgeflechts an ihren Enden paarweise durch Schlaufen (22') derart gelenkig miteinander verbunden sind, dass sie keine die Tiere verletzende Schneidkanten bilden.

## Claims

1. Protective device for animal breeding, such as the breeding of fish, bivalves or molluscs,
with a plurality of inner cages (15) which can be positioned in a body of water (11) and are formed of a net (16) while being dimensioned with such a mesh width (16') that the animals that are to be bred are retained inside them,
wherein said inner cages (15) are surrounded by at least one spaced-apart outer cage (20) that is made of a net (21) of thin wires (22), its mesh width (26') being larger than that of the inner cages (15),
and wherein it is ensured by said outer cage (20) that predatory animals cannot damage the net (16) of the inner cages (15) from the outside,
**characterised in that** the net (21) of the outer cage (20) is formed of a wire netting (22) formed from helically bent single wires (22)
and the wire netting forms a quadrangular diagonal netting with rhomboid-shaped meshes (26) and with a three-dimensional mattress-like structure,
wherein the outer cage (20) is held all over by an upper floating frame (24) in a circulating manner
and wherein the inner cages (15) are realised as modules and the frame (23) is divided into a plurality of sections (23'), in each of which respectively one inner cage (15) is insertable as a module.

2. Protective device according to claim 1,
**characterised in that,** for the purpose of the cage (20) approximately keeping its stable shape and thus also a defined distance (a) from the inner cages (15) all around, even with strong currents in the body of water, the outer cage (20) is tensioned by longitudinal elements (24) running to the ground of the water body (12).

3. Protective device according to claim 1 or 2,
**characterised in that** the inner cages (15), which are made of a synthetic material, are held by connection elements (17) in such a way that they are spaced apart from the outer cage (20) all around.

4. Protective device according to one of the preceding claims 1 to 3,
**characterised in that** the thin wires (22) of the outer cage (20) have a diameter between 1 mm and 3 mm.

5. Protective device according to one of the preceding claims 1 to 4,
**characterised in that** the net (21) of the outer cage (22) is realised with mesh widths between 70 mm and 90 mm, the mesh widths (15') of the inner cages (15) being 10 mm to 30 mm.

6. Protective device according to one of the preceding claims 1 to 4,
**characterised in that** the thin wires (22) of the outer cage are made of a high-strength steel having a nominal strength of at least 1,000 N/mm².

7. Protective device according to one of the preceding claims 1 to 6,
**characterised in that** the thin wires (22) of the outer cage are made of a rust-resistant and salt-water resistant material.

8. Protective device according to one of the preceding claims 1 to 7,
**characterised in that** the individual helically bent wires (22) of the wire netting are connected to one another at their ends in pairs in an articulate manner by loops (22') in a manner avoiding the formation of cutting edges that injure the animals.

## Revendications

1. Dispositif de protection pour l'élevage d'animaux tel que la pisciculture, la mytiliculture ou l'élevage de mollusques,
avec une pluralité de cages intérieures (15) qui peuvent être mises en place dans un milieu aquatique (11) et qui sont formées d'un filet (16), lesdites cages intérieures (15) étant dimensionnées avec une telle largeur de maille (16') que les animaux qui sont à être élevés soient retenus par lesdites cages (15),
lesdites cages intérieures (15) étant entourées d'au moins une cage extérieure (20) qui est écartée et est produite d'un filet (21) des fils métalliques minces (22),
la largeur de maille (26') de ladite cage extérieure (20) étant supérieure à la largeur de maille (16') des cages intérieures (15) et ladite cage extérieure (20) assurant que des animaux prédateurs ne puissent pas endommager le filet (16) des cages intérieures (15) de l'extérieur,
**caractérisé en ce que**
le filet (21) de la cage extérieure (20) est configuré d'un treillis métallique formé des fils métalliques individuels (22) courbés en forme d'hélice et
le treillis métallique forme un treillis diagonal à quatre angles, ayant des mailles en forme de rhombe (26) et ayant une structure tridimensionnelle semblable de matelas,
la cage extérieure (20) étant maintenue de manière circulant par un cadre supérieur flottant (24)
et les cages intérieures (15) étant réalisées comme modules et
le cadre (23) étant divisé en plusieurs sections (23'), dans chacune desquelles respectivement une cage intérieure (15) est insérable comme module.

2. Dispositif de protection selon la revendication 1,
**caractérisé en ce que** la cage extérieure (20) est tendue par le biais des éléments longitudinaux (24) guidés vers le fond du milieu aquatique (12), pour que la cage (20) approximent maintienne sa forme stabile et ainsi tout autour maintienne l'écartement défini (a) des cages intérieures (15) même à fort courant dans le milieu aquatique.

3. Dispositif de protection selon la revendication 1 ou 2,
**caractérisé en ce que** les cages intérieures (15), qui sont réalisées d'un matériau synthétique, sont maintenues par des éléments connectifs (17) d'une telle manière qu'elles soient tout autour écartées de la cage extérieure (20).

4. Dispositif de protection selon l'une des revendications précédentes 1 à 3,
**caractérisé en ce que** les fils métalliques minces (22) de la cage extérieure (20) présentent un diamètre entre 1 mm et 3 mm.

5. Dispositif de protection selon l'une des revendications précédentes 1 à 4,
**caractérisé en ce que** le filet (21) de la cage extérieure (22) est implémenté avec des largeurs de maille entre 70 mm et 90 mm, les largeurs de mailles (15') des cages intérieures (15) étant 10 mm à 30 mm.

6. Dispositif de protection selon l'une des revendications précédentes 1 à 4,
**caractérisé en ce que** les fils métalliques minces (22) de la cage extérieure sont produits d'un acier à haute résistance ayant une résistance nominale d'au moins 1.000 N/mm².

7. Dispositif de protection selon l'une des revendications précédentes 1 à 6,
**caractérisé en ce que** les fils métalliques minces (22) de la cage extérieure consistent d'un matériau inoxydable et résistant à l'eau salée.

8. Dispositif de protection selon l'une des revendications précédentes 1 à 7,
**caractérisé en ce que** les fils métalliques individuels (22) du treillis métallique, qui sont courbés en forme d'hélice, sont raccordés en articulation par paires dans ses extrémités, moyennant des boucles (22'), d'une telle manière qu'ils ne forment pas des bords coupants blessant les animaux.
